# EUROPEAN PATENT APPLICATION

(11) **EP 3 881 684 A1**
(43) Date of publication of application: **22.09.2021**
(21) Application number: 19885249.3
(22) Date of filing: 04.11.2019
(51) Int. Cl.: A23L 3/30, A23L 3/34, A23L 3/3409, B05B 17/04, B05B 17/06

(54) **IN-LINE SPRAYING SYSTEM VIA ULTRASOUND, WHICH CAN BE USED IN THE DISPENSING OF AGROCHEMICAL AGENTS FOR POST-HARVEST FRUIT**

(30) Priority: 16.11.2018 CL 20183252
(71) Applicant: Universidad De Concepcion, Concepción (CL)
(72) Inventor: RADRIGAN EWOLDT, Rudi, Concepción (CL); ROJAS CABALÍN, Sixto, Concepción (CL)
(74) Representative: Clarke Modet & Co.
(86) International application number: PCT/CL2019/050109
(87) International publication number: WO 2020/097746

(57) **Abstract**

The invention relates to an in-line spraying System via ultrasound, which can be used in the dispensing of agrochemical agents for post-harvest fruit, comprising: a spray chamber formed by a closed tank containing the liquid to be sprayed, an agitator, two ultrasound transducers and a fan; a chamber for applying the mist to the fruit, formed by a closed chamber disposed on the processing line, which has gates with slats for allowing the fruit in and out, a cylindrical applicator for the agrochemical, which is connected to the spray chamber via a duct; and a chamber for recovering the mist, formed by a closed tank coupled to the application chamber, below the Processing line, which is connected to the spray chamber via a duct, and wherein the recovered mist is moved by the fan. The invention also relates to a process for operating the system.

## Description

### Technical Area

The technology is oriented to the fruit area, more particularly, corresponds to an in-line spraying system via ultrasound, useful in the dispensing of agrochemical agents for post-harvest fruit.

### Prior Art

The application of chemical elements in the fruit in post-harvest stages allows to decrease and/or eliminate the microbial load of the skin of the fruit, resulting in a significant increase in its shelf life. For this, agrochemical spray is commonly used which is applied after selection and before packaging, allowing to ensure uniformity of the application of chemical agents.

Generally, the efficiency of nebulization is related to the ability to deposit on the surface of the fruit (in the skin), without affecting the wax that covers them, called pruina, which is present in fruits such as cherries, plums and grapes; and crossing the cilia present in fruits such as kiwis and peaches, which act as a barrier decreasing the effect produced by the compound.

For this purpose, different spray techniques have been defined, such as hydraulic nebulization, which consists of generating droplets of a suspension of the diluted agent by means of the strangulation of the solution using sprinklers, this pulverizes the fluid and produces microdroplets of between 200 and 800 µm. There is also the electrostatic nebulization method wherein an electric charge of the droplets occurs once they are formed by conventional procedures; and then the mixture circulates at speeds close to the speed of the sound through nozzles provided with an electrode that charges static electricity to the particles once they pass through the nozzle, and that are directed to the object to be sprayed where the particles disperse homogeneously due to the attraction of the positive charge of the fruit mass. This method achieves a droplet size of between 100 and 200 µm.

One of the limitations of these systems is that in fruits that have pruina, the mass of the droplet of water damages this layer, leaving the fruit stained and prone to rotting. In addition, in the case of fruits with hairs such as peaches and kiwis, the droplet size does not pass through the cilia barrier, which makes it necessary to increase the exposure time, also causing the fruit to get wet and increase the risk of rotting.

To solve this limitation, ultrasonic spray has emerged as an alternative for the application of chemicals in fruits, which acts by forming microdroplets through sending ultrasonic waves to a solution or suspension of solids to generate a disturbance in the means and divide it, forming a cold mist that is sent to an application chamber where the fruit is arranged. Spraying via ultrasound allows to generate microdroplets of sizes between 1-100 µm, and where a piezoelectric transducer is used that must operate at a frequency between 0,0005 and 3 MHz. While these devices make it possible to decrease the droplet size for spraying chemical suspensions, they are not able to discriminate the appropriate droplet size to be used. This is a limitation because it is necessary to apply a frequency range according to the particle size since, if the agrochemicals are of high molecular weight, they cannot be suspended in droplets of less than 10 µm size since they fail to coat the molecules, the concentration of the agrochemical agent deposited in the fruit being insufficient to perform its disinfectant effect. Conversely, if the particle is of low molecular weight, less than 30 µm, the droplets cannot be large in size, because they carry too much water and cause the fruit to moisten, which promotes the growth of microorganisms.

Some technologies related to ultrasonic post-harvest fruit nebulizers are presented below:
a. Patent application MX2016004514 (Sabanillas) entitled *"Process of sanitizing plants by ultrasonic spraying of a sanitizer".* The invention relates to an in-line ultrasonic spraying system, wherein the spraying occurs by immersion of the sanitizer in the piezoelectric transducers, which can occur in a section outside the plant spaying bed, and carried there by a conduit between these sections. The vibration frequency of the transducers allows to nebulize particles between 0,5 and 6 µm.
b. Patent US 7,810,742 (Levi), entitled 'Ultrasonic fog generator'. Disclosed is an ultrasonic spraying system for chemicals containing a steam generating unit, composed of a bath with the liquid to be misted and a transducer, which operates at a frequency between 1,5 and 2,5 MHz and allows to dispense particles between 1 to 50 microns. The generated steam enters a separate chamber containing a heater and a fan, which then carries the steam to different spray chambers.
c. Patent US 6,439,474 (Denen) entitled "*Control system for atomizing liquids with a piezoelectric vibrator*"*.* An ultrasonic liquid dispensing atomizer is protected, utilizing vibration from an annular piezoelectric device arranged in the atomizer nozzle, covered by a membrane, and further comprising an atomizer drive circuit, a voltage generator, and an atomizer drive control operating system.

Based on this background, there is still a need to find alternatives to spray agrochemicals on post-harvest fruits efficiently and without causing damage to them.

### Brief Description of the Drawings

Figure 1: Diagram of the in-line spraying system via ultrasound.
Figure 2: Experimental spraying system via ultrasound.
Figure 3: Images of sprinkling (3a and 3b) and spraying (3c) assays for Kiwi.
Figure 4: Images of the sprinkling (4a and 4b) and spraying (4c) assays for blueberries.

### Disclosure of the Invention

The present technology corresponds to an in-line spraying system via ultrasound transducers, useful in the dispensing of agrochemical agents for post-harvest fruit with prune and/or hair, more specifically, for fruits of the peaches, kiwis, plums and blueberries type. This spraying system can be installed directly on the post-harvest fruit selection process lines, allowing their mobility, without requiring modification to adapt and avoiding alterations in the structure of the plant.

Advantageously, the spraying system makes it possible to generate different droplet sizes to adapt to the particle size of the agrochemical agent to be applied, and thus allow the complete coating of the particles and avoid excess water. The agrochemical agents may be present in liquid form or as suspended solids between 0,3 µm and 100 µm in size.

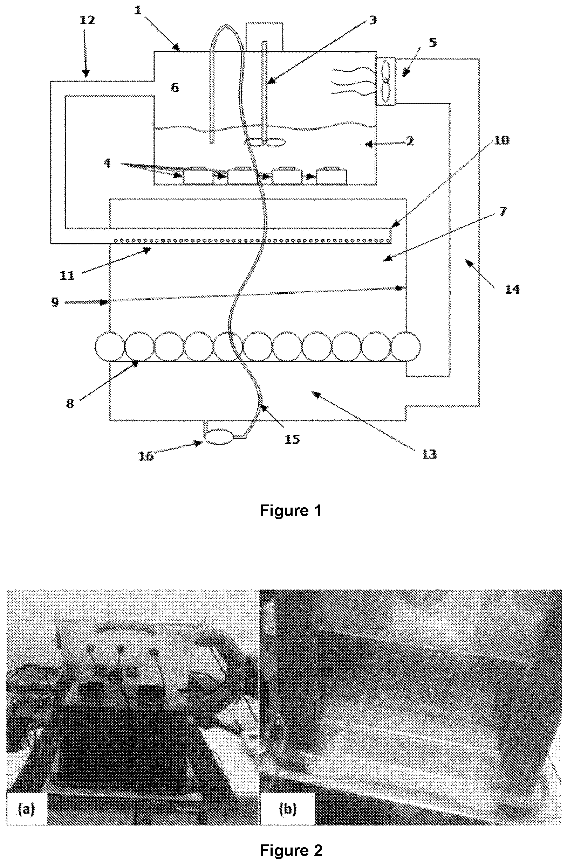

This spraying system comprises at least three chambers, which are described below, taking as reference Figure 1:
a. a spray chamber composed of a closed tank (1) containing the liquid to be sprayed (2), an agitator disposed in the upper section of the tank (3) formed by a rotor with blades, which must be immersed in the liquid to be sprayed (2) at a height of at least 1/3 of the liquid level; at least two ultrasound transducers (4) of different frequency operating between 0,75 and 1,0 MHz and between 0,9 and 1,7 MHz, with an adjustable power between 5 and 60 W, immersed in the liquid at a distance of between 10 and 20 cm from the base, with an equidistant distribution with respect to the center of the base of the chamber; and a fan (5) that moves the steam towards the outlet of the tank (6). Optionally, this chamber may contain more than one transducer of equal frequency to increase the mist formation rate, allowing more fruits to be processed per minute.
b. a chamber for applying the mist to the fruit, composed of a closed chamber (7) disposed on the processing line (8), which has gates with slats (9) for the entry and exit of the fruit, a cylindrical applicator (10) of the agrochemical agent located at the top and parallel to the processing line with perforations of 2mm in diameter in the lower area (11), to distribute the mist homogeneously, which is connected to the spray chamber by means of a duct (12) of diameter between 0,2 - 3,2 cm.
c. a mist recovery chamber, composed of a closed tank (13) coupled to the application chamber, below the processing line (8) which is connected to the spray chamber by a duct (14) of diameter between 1 and 2 cm, where the recovered mist is moved by the fan (5). Optionally, this chamber may contain a line for returning condensed liquids (15) to the mist chamber, for which it must be connected to a self-primming suction pump (16). The latter makes it possible to recover the product that was not used or not adhered to the fruit and can be reused.The spray, application and recovery chambers may be made from insulating material, preferably, but exclusively of food-grade plastic, to prevent condensation of the mist due to heat transfer by conduction.

On the other hand, the process for operating the selective spraying system of agrochemical agents comprises at least the following steps:
i. Arrangement of the liquid to be sprayed in the closed tank (1) and keep under agitation using the rotor (3) at a speed of between 0,8 to 4m/s;
ii. Activation of transducers (piezoelectric crystals), which depending on the particle size to be sprayed the following frequencies can be applied:
   Frequencies of between 1,0 and 1,75 MHz and power between 1 and 10 W for compounds with a particle size of between 3 and 10 µm; or
   Frequencies of between 0,5 and 0,9 MHz and power between 5 and 60 W for compounds with a particle size of between 11 and 100 µm;
iii. Application of the spayed solution to the fruits in line by regulating the speed of the fan (5):
   applying a fan speed of between 2000 and 3000 rpm to generate a flow rate of between 10 and 16 m3/min, useful on fruits smaller than 2,2 cm in equatorial diameter; or
   applying a fan speed of between 250 and 1000 rpm to generate a flow rate of between 2 and 6 m³/min, useful in fruits larger than 7 cm.

The regulation of the flow rate depending on the fruit size, allows to obtain the concentration of the chemical agent necessary to perform its effect.

The spraying system and the process for the selective spraying of compounds allows the application of agrochemical agents of various molecular weights, without damaging the pruina of waxy fruits and in fruits with hairs allowing the passage of the agent easily through the cilia barrier. Selective nebulization keeps the fruit dry and ensures rapid evaporation of water, which is used as a vehicle for transmitting the chemical substance.

### Application Examples

Example 1: Determination of the frequency of operation to spray Iprodione®.

The experimental spraying system via ultrasound was used (see Figure 2), where it was worked with frequencies of 0,5 to 1,75 MHz to spray Iprodione® and obtain a concentration of 2 ppm of chemical agent on the surface of kiwis. This chemical agent corresponds to a fungicide and has a molecular weight of 330,17 g/mol and a water solubility of 13,9 mg/L

The frequency of the transducers was evaluated, using a power of 30W, which generated a mist at a rate of 4 m³/min, a flow rate of 0,1 m³/min and a processing speed of 50 kiwis per minute with a residence time of 5 s; the surfaces of the kiwis were subsequently analyzed to determine the concentration of fungicide by HPLC method.

10 liters of a solution with a concentration of 15% (w/v), equivalent to 150 g/ L solution, were used, obtaining the results shown in Table 1,

**Table 1: Concentration in ppm, as a function of cavitation frequency.**

| **Cavitation frequency (MHz)** | **Fruit concentration (ppm)** |
|---|---|
| 0,5 | 5,1 |
| 0,75 | 301 |
| 1,0 | 1,95 |
| 1,25 | 1,1 |
| 1,5 | 0,54 |
| 1,75 | 0,1 |

From these results it can be concluded that, in order to achieve a concentration greater than 2 ppm for this compound, it is necessary to use transducers with low cavitation frequencies to generate larger droplets and coat this molecule having a high molecular weight.

### Example 2: Determination of operating conditions of the spraying system

With the results of Table 1, the operating conditions of the spraying system were determined to obtain a concentration of 2 ppm of Iprodione® on the surface of Kiwis. The flow rate of cold mist and dilution of the chemical agent were evaluated, where 3 concentrations were used: 0,3% w/v; 3% w/v and 15% w/v.

Considering the molecular weight, the equipment was configured to work with the transducers of 0,7 MHz applying a power of 30 W to a volume of 10 L of solution, this allowed to generate a cold mist with a formation rate of 4 m³/min. The fruit was transported through the application chamber at a rate of 50 fruits per minute with a residence time of 5 seconds, which corresponds to the time it takes to turn twice the fruit on the conveyor belt.

The determination of the concentration of chemicals deposited in the fruit was performed through specific residue analysis in HPLC (mass/mass). The ppm results by fruit of the application of Iprodione® in kiwis are presented in Table 2,

**Table 2, Concentration of Iprodione® in fruits in using different dispersion flows of cold mist.**

| **Solution Concentration (w/v)** | **Fruit concentration (ppm)** | |
|---|---|---|
| | **Flow rate of 1 m³/min** | **Flow rate of 0,1 m³/min** |
| 15% | 0,19 | 3,09 |
| 3% | 0,02 | 0,38 |
| 0,30% | 0,01 | 0,13 |

From these results it follows that the coating value equal to or greater than 2 ppm Iprodione® was achieved, using a low flow rate (0,1 m³/min) since this flow allowed the mist to remain suspended for a longer time and, therefore, the density and concentration of the mist was also higher. It was also possible to estimate by simple interpolation that in order to obtain 2 ppm of Iprodione® on the surface of kiwis it was necessary to use a solution of 10,18% (w/v).

### Example 3: Comparison of application of Iprodione® by spraying v/s ultrasound.

The application of Iprodione® in 50 Kiwi fruits and blueberries was compared by ultrasound method and 50 fruits with air pressure atomization with 10 liters of solution at a concentration of 10,18% (w/v), using a Sony H300 brand 20,1 mp HD camera. High-speed images were taken in the application of the solution in both sprinkling and spraying, and the results were subsequently analyzed by HPLC for the quantification of the residue in the fruit.

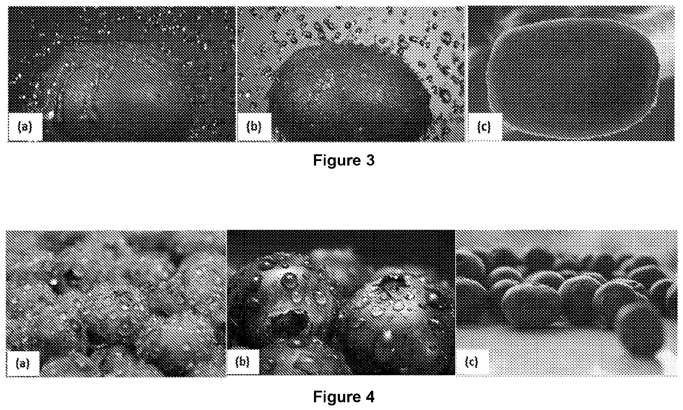

The application of the sprinkling was carried out at 15 cm and 30 cm from the sprinkler to the fruit, and the nebulization at 30 cm from the fruit. Figure 3 shows the spraying assay for kiwi (3a and 3b) and Figure 4 for blueberry (4a and 4b), where it can be seen that the skin of both fruits suffers damage by the droplet size; opposite case to that presented by the spraying technique (Figure 3c for kiwi and Figure 4c for blueberry), where better impregnation was achieved. These samples were allowed to stand for 24 hours and the amount of fungicide present in the fruit was analyzed, the results are shown in Table 3,

**Table 3, Concentration of Iprodione® in fruits in using dispersion of cold mist and sprinkling at 15 and 30 cm.**

| **Fruit concentration (ppm) /** | | | |
|---|---|---|---|
| **Ten Fruit Average** | **Flow rate of 1 m³/min, Spraying** | **Flow rate of 1 m³/min, Sprinkling 15cm** | **Flow rate of 1 m³/min, Sprinkling 30cm** |
| Kiwi Group 1 | 2,1 | 2,5 | 2,3 |
| Kiwi Group 2 | 1,9 | 2,7 | 2,1 |
| Kiwi Group 3 | 2 | 2,6 | 2,3 |
| Kiwi Group 4 | 1,9 | 2,5 | 2,4 |
| Kiwi Group 5 | 2 | 2,7 | 2,3 |
| Blueberry Group 1 | 1,3 | 1,5 | 1,4 |
| Blueberry Group 2 | 1,1 | 1,6 | 1,3 |
| Blueberry Group 3 | 1,2 | 1,6 | 1,4 |
| Blueberry Group 4 | 1,1 | 1,5 | 1,4 |
| Blueberry Group 5 | 1,2 | 1,6 | 1,4 |

As shown in Table 3, the spraying application was not uniform and exceeded the expected levels. Although we worked with kiwi and blueberry which are very complex fruits due to their skin and the presence of wax, the ultrasound application could be applied successfully and this can be extended to other fruits.

## Claims

1. An in-line spraying system via ultrasound, useful in the dispensing of agrochemical agents for post-harvest fruit, comprising at least the following components:
a. a spray chamber composed of a closed tank (1) containing the liquid to be sprayed (2), an agitator disposed in the upper section of the tank (3) formed by a rotor with blades, which must be immersed in the liquid to be sprayed (2) at a height of at least 1/3 of the liquid level; at least two ultrasound transducers (4) of different frequency operating between 0,75 and 1,0 MHz and between 0,9 and 1,7 MHz, with an power between 5 and 60 W, immersed in the liquid at a distance of between 10 and 20 cm from the base, with an equidistant distribution with respect to the center of the base of the chamber; and a fan (5) that moves the steam towards the outlet of the tank (6);
b. a chamber for applying the mist to the fruit, composed of a closed chamber (7) disposed on the processing line (8), which has gates with slats (9) for the entry and exit of the fruit, a cylindrical applicator (10) of the agrochemical agent located at the top and parallel to the processing line with perforations of 2mm in diameter in the lower area (11), to distribute the mist homogeneously, which is connected to the spray chamber by means of a duct (12); and
c. a mist recovery chamber, composed of a closed tank (13) coupled to the application chamber, below the processing line (8) which is connected to the spray chamber by a duct (14), where the recovered mist is moved by the fan (5).

2. An in-line spraying system via ultrasound, useful in the dispensing of agrochemical agents for post-harvest fruit according to claim 1, wherein the duct (12) of the mist application chamber has a diameter between 0,2 - 3,2 cm.

3. An in-line spraying system via ultrasound, useful in the dispensing of agrochemical agents for post-harvest fruit according to claim 1, wherein the duct (14) of the mist recovery chamber has a diameter between 1 and 2 cm.

4. An in-line spraying system by ultrasound, useful in the dispensing of agrochemical agents for post-harvest fruit according to claim 1, wherein, optionally, the mist recovery chamber contains a line for returning condensed liquids (15) to the spraying chamber, connected by means of a self-priming suction pump (16).

5. An in-line spraying system via ultrasound, useful in the dispensing of agrochemical agents for post-harvest fruit according to claim 1, wherein the spray, application and recovery chambers are made of an insulating material of the food-grade plastic type.

6. A process for operating the in-line spraying system of claim 1, comprising at least the following steps:
i. Arrange the liquid to be sprayed in the closed tank (1) and keep under agitation using the rotor (3) at a speed of between 0,8 to 4m/s;
ii. Activate the transducers according to the particle size to be sprayed, applying the following frequencies:
Frequencies of between 1,0 and 1,75 MHz and power between 1 and 10 W for compounds with a particle size of between 3 and 10 µm; or
Frequencies of between 0,5 and 0,9 MHz and power between 5 and 60 W for compounds with a particle size of between 11 and 100 µm;
iii. Apply the spayed solution to the fruits by regulating the speed of the fan (5):
applying a fan speed of between 2000 and 3000 rpm to generate a flow rate of between 10 and 16 m3/min, for fruits smaller than 2,2 cm in equatorial diameter; or
applying a fan speed of between 250 and 1000 rpm to generate a flow rate of between 2 and 6 m3/min, for fruits larger than 7 cm.
